# EUROPEAN PATENT SPECIFICATION

(11) **EP 1 829 597 B1**
(45) Date of publication and mention of the grant of the patent: **07.11.2012**
(21) Application number: 05816833.7
(22) Date of filing: 14.12.2005
(51) Int. Cl.: B01D 53/04, B01D 46/00, B01D 46/02

(54) **METHOD FOR TREATMENT OF EXHAUST GAS**
VERFAHREN ZUR BEHANDLUNG VON ABGAS
PROCEDE POUR LE TRAITEMENT DE GAZ D'ECHAPPEMENT

(30) Priority: 15.12.2004 JP 2004362416; 11.01.2005 JP 2005003299
(43) Date of publication of application: 05.09.2007
(73) Proprietor: SINTOKOGIO, LTD., Nagoya-shi, Aichi-ken 450-0002 (JP)
(72) Inventor: TAKAYANAGI, Keisuke, Sintokogio Ltd, Sinto Ecotec Company, Nukata-gun Aichi, 444-0104 (JP); SUZUKI, Tomoyuki, Sintokogio Ltd, Sinto Ecotetec Company, Nukata-gun Aichi, 444-0104 (JP); IKENO, Hidenori, Sintokogio Ltd, Sinto Ecotec Company, Nukata-gun Aichi, 444-0104 (JP)
(74) Representative: Wibbelmann, Jobst
(86) International application number: PCT/JP2005/022942
(87) International publication number: WO 2006/064836

(56) References cited:
- GB-A- 2 164 870
- JP-A- 05 259 133
- JP-A- 11 114 366
- JP-A- 11 156 146
- JP-A- 2000 158 176
- JP-A- 2001 338 910
- JP-B1- 51 016 383
- JP-Y1- 37 003 982
- US-A- 4 963 134
- US-B1- 6 203 762
- US-B1- 6 585 791

## Description

### Field of the Invention

This invention relates to a method of exhaust-gas treatment. In particular, this invention relates to a method for removing certain entrained materials, which are, typically, odoriferous substances, from exhaust gas.

### Background of the Invention

A dust collector equipped with a bag-filter element ("a bag filter filtration system") is disclosed in, e.g., JP 2002 04831, as a prior-art exhaust-gas treatment system. In the bag filter filtration system, a bag-filter element(s) and a fixed-bed-type blower fan adsorption tower containing an adsorbent are provided in this order upstream of an exhaust-gas line blower fan incinerator. A filtering aid is applied on the surface on the exhaust-gas inflow side of a filter medium that is contained in the bag- filter element. No cleaning of the filter medium is carried out while the collecting is being carried out.

Applying the prior-art bag filtering system to, for example, a laser trimmer, results in disadvantages. For example, trimming a resin by a laser trimmer generates exhaust gas with entrained odoriferous substances having substrates in a vapor phase or a gas phase or both, and thus high adhesive properties.

Because the bag-filter element cannot collect a sufficient quantity of such odoriferous substances having high adhesive properties, thus they can be deposited on it, then, for example, the odoriferous substances in the vapor phase may deposit vapor on it, and the bag-filter element may be clogged at an early stage. Accordingly, there is a requirement for a system for exhaust-gas treatment that can prevent its bag-filter element from clogging at an early stage.

One prior-art method of exhaust-gas treatment is disclosed in JP 2004290791. In this method, exhaust gas passes through an active carbon layer that is comprised of fine active carbon powder, and thus the entrained odoriferous substances can be absorbed and removed by the active carbon. The exhaust gas passes through the active carbon layer at a relatively high flow rate, typically, a range from 15 to 20 m per minute, in order to increase the quantity of the exhaust gas to be treated.

With such a high flow rate, however, the exhaust gas can flow over the surfaces of fine active carbon particles at a relatively high flow rate and thus cannot penetrate these particles. Consequently, this method involves a problem in that it cannot treat the exhaust gas at a desired and sufficient rate. Accordingly, there is also a requirement for a method of exhaust-gas treatment that has an enhanced rate in the treatment of the exhaust gas.

JP 2000 158 176 A discloses a method and a device for removing harmful substances including dioxine from the exhaust of a laser beam machine. First, particles are removed and, subsequently, dioxine is removed by means of an activated charcoal adsorption filter.

US 6,203,762 B1 discloses a method and a device for filtering components from a laser surgery plume by means of layers of powdered activated carbon. A particle filter may be present.

### Summary of the Invention

Disclosed herein is a system for treating exhaust gas generated from a source. This system comprises guiding means for guiding the exhaust gas from the source; active carbon adsorption means that is layered and formed of granular active carbon with a quantity of active carbon particles that can adsorb any entrained odoriferous substances from the guided exhaust gas passing through therein; and a bag-filter element for collecting the certain entrained substances from the exhaust gas passing through the active carbon adsorption means.

The entrained odoriferous substances of the exhaust gas have a substrate, which may be in a gaseous phase, or a vapor phase, or both. The certain substances to be collected by the bag filter element include dust, hazardous chemical substances, etc.

The source of the exhaust gas may include a laser trimmer, semiconductor manufacturing equipment, LCD manufacturing equipment, etc. The method of the present invention is for example applicable to treat exhaust gas that is generated from a laser trimmer when it trims plastic, a resin, or an IC substrate.

The layered, active carbon absorption means form a cylinder defined by an outer wall. The guiding means guides the exhaust gas through the outer wall from its outside to its inside at a velocity of 3 to 12 m min and a time of 0.3 to 1.0 second during which the exhaust gas is in contact with the granular active carbon.

The present invention thus provides a method of treating exhaust gas as defined in the claims using an active carbon adsorption means that is layered and formed of granular active carbon in which the quantity of active carbon particles forms a cylinder defined by an outer wall, to remove the entrained odoriferous substances from the exhaust gas. The method comprises the steps of guiding the exhaust gas to the active carbon adsorption means; and absorbing the odoriferous substances by the active carbon particles by passing the exhaust gas through the outer wall from its outside to its inside. This step is carried out at a velocity of 3 to 12 m min per minute and a time of 0.3 to 1.0 second during which the exhaust gas and the granular active carbon are in contact with each other.

Also disclosed is a system of exhaust-gas treatment for removing the entrained odoriferous substances from exhaust gas generated from a source. The system comprises guiding means for guiding the exhaust gas to the source; a cylindrical deodorizing filter that is layered from a quantity of granular active carbon and forms a cylinder; and wherein the guiding means guides the exhaust gas passing through the enclosed active carbon particles from the outside of said cylinder to the inside thereof at a velocity of 3 to 12 m min per minute and from 0.3 to 1.0 second of time during which the exhaust gas and the granular active carbon are in contact with each other.

In one embodiment for use in the method of the present invention, a cylindrical deodorizing filter is formed by enveloping with a mesh the layered granular active carbon that comprises a quantity of active carbon grains. The cylinder may have a cross section with a circular or starburst profile. The cylinder may have a periphery with a bellows.

The present invention employs granular active carbon, rather than powdered active carbon, whose typical diameter is 1 to 150 µm. Preferably, the granular active carbon has an average grain diameter from 1.0 to 10.0 mm. The granular active carbon may be a granulated active carbon, or a crushed active carbon, which has multifaceted surfaces. Alternatively, the granular active carbon may be a mixture of granulated active carbon and crushed active carbon.

A further aspect and an advantage of the present invention is best understood by referring to the detailed description of the preferred embodiments together with the attached drawings.

### Description of the Preferred Embodiment

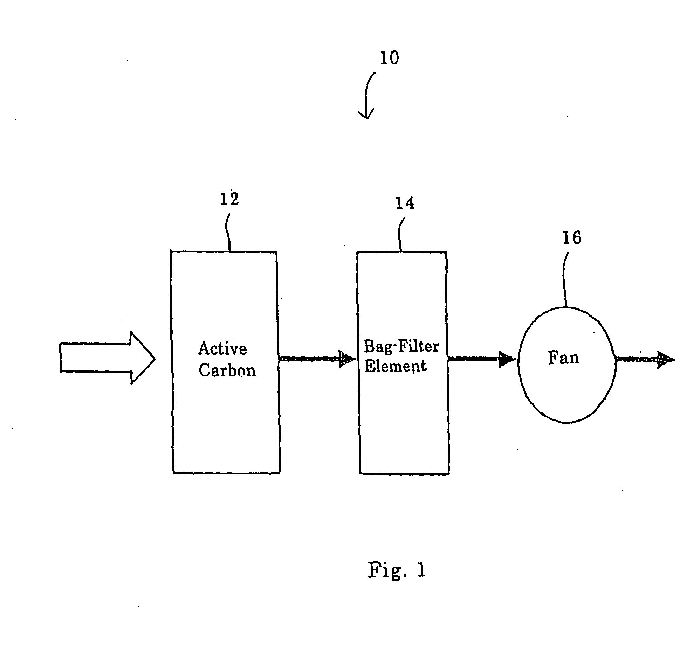

Fig. 1 shows a schematic diagram of a dust collector equipped with a bag filter element in which an exhaust-gas treatment system is adopted. The filtering bag dust collector 10 includes a deodorizing layered active carbon filter 12 as a pre-filter to remove entrained odoriferous substances (in a gaseous phase or a vapor phase, or both) from the corresponding exhaust gas, and a bag-filter element 14 as a primary filter to remove dust from the exhaust gas passing through the deodorizing layered filter 12. The dust collector 10 also includes a blower fan 16 to suck in and guide the exhaust gas. The deodorizing layered filter 12 and the bag filter element are attached to the inside of a hermetic cabinet (not shown). The blower fan 16 is in communication with the cabinet via a duct (not shown) such that the exhaust gas from a source is sucked in and guided to the interior of the cabinet. Continuously, the exhaust gas is first introduced and passed through the deodorizing filter 12 and then passed through the bag-filter element 14.

The deodorizing layered active carbon filter 12 is formed by a layer that is composed of a quantity of granular active carbon. Preferably, the granular active carbon has an average grain diameter of from 1.0 to 10.0 mm, for the following reasons. If the average grain diameter is less than 1.0 mm, the deodorizing filter 12 may be clogged at a relatively early stage, since the internal pores of the granular active carbon are so small. If the average grain diameter is more than 10 mm, the deodorizing property of the granular active carbon is degraded. With the average grain diameter ranging from 1.0 to 10.0 mm, the sizes of the internal pores of the granular active carbon can be relatively wide and thus their internal spaces can prevent the clogging with the odoriferous substances at an early stage.

The granular active carbon is not limited to a granular type. Crushed active carbon, which has multifaceted surfaces, may also be used. Alternatively, a mixture of the granulated active carbon and the crushed active carbon may be used.

The filtering bag dust collector 10 as in Fig. 1 is applicable to treat exhaust gas from, e.g., a laser trimmer. Because the exhaust gas can be generated from the laser trimmer while it trims, e.g., a resin, the blower fan 16 of the filtering bag dust collector 10 is put in operation. This exhaust gas has a high adhesive property, since it is associated with the entrained odoriferous substances in a gaseous phase or a vapor phase, or both. The exhaust gas, which is sucked and guided by the blower fan 16, is first introduced and passed through the deodorizing filter 12. The odoriferous substances in any phase that have a high adhesive property then adhere to the surfaces of the grains of the granular active carbon, and thus most or substantially all of them are adsorbed. The resulting exhaust gas is then passed through the bag-filter element 14 to remove its dust and hazardous chemical substances. The bag-filter element 14 cannot be clogged at an early stage, since all of the odoriferous substances that had a high adhesive property had been previously removed by the deodorizing filter (the pre-filter) 12.

The sources to which the filtering bag dust collector 10 can be applied are not limited to a laser trimmer, but may include semiconductor-manufacturing equipment, LCD-manufacturing equipment, or other such equipment.

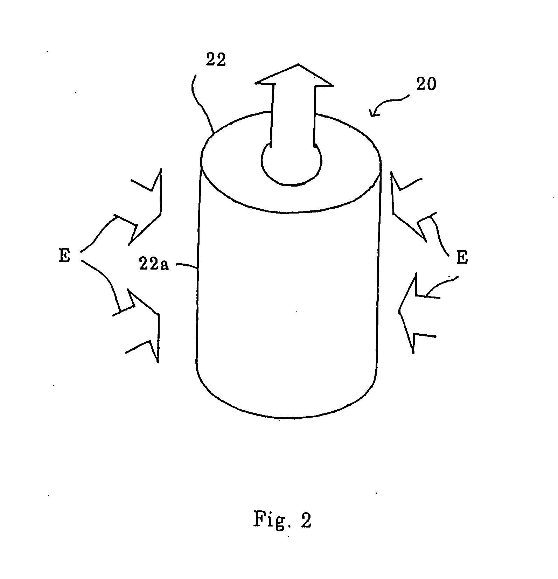

Fig. 2 shows an exhaust-gas treatment system to be used in the method of the present invention. The system 20 includes a deodorizing active carbon filter 22. This deodorizing filter 22 is formed as a cylinder whose outer wall is defined by a layer comprised of a quantity of the granular active carbon. To make such cylindrical granular active carbon, the layered granular active carbon is enveloped and fixed by a mesh (e.g., a metallic mesh) 22a having an appropriate mesh member to form a cylinder having a predetermined shape. Such a type of deodorizing filter 22 can be replaceably mounted on the exhaust-gas treatment system 20 using any known way. Accordingly, the deodorizing filter 22 may be manufactured as a replaceable part for the system 20.

In this embodiment, the deodorizing cylindrical filter 22 has an outer diameter of 250 mm, an inner diameter of 150 mm, and a length of 400 mm.

The exhaust-gas treatment system 20 also includes a blower fan 24 to guide the exhaust gas such that it passes through the deodorizing cylindrical filter 22 from its outside to its inside. The blower fan 24 is in communication with the deodorizing filter 22 via a duct (not shown). The blower fan 24 is configured such that the exhaust gas is passed through the deodorizing cylindrical filter 22 from its outside to its inside at a velocity of 3 to 12 m per minute and a period of 0.3 to 1.0 second during which the exhaust gas and the granular active carbon are in contact with each other. If the contact time is less than 0.3 second, the deodorizing efficiency of the deodorizing filter 22 is 75% or less, whereas if the contact time is 1.0 second or more, the deodorizing efficiency of the deodorizing filter 22 has no significant increase. Similar to the first embodiment, the granular active carbon preferably has an average grain diameter of 1.0 to 10.0 mm. Also similar to the first embodiment, the granular active carbon may be a granular leukocyte-type or crushed active carbon, or a mixture of them.

In the exhaust-gas treatment system 20, introducing exhaust gas E to the deodorizing filter 22 by a blower fan (not shown) at 2 m³ of air per minute causes the exhaust gas E to flow through the deodorizing filter 22 at a flow rate of 7 m per minute, in 0.43 second.

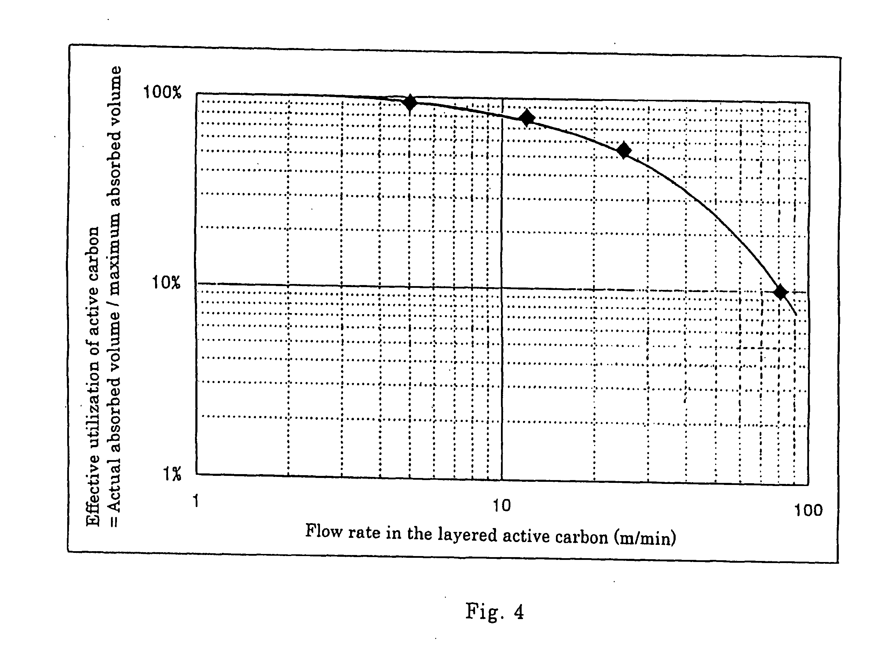

The time that the exhaust gas and the granular active carbon are in contact with each other and the deodorizing efficiency of the deodorizing filter 22 during that contact time are measured when the exhaust gas has passed through the outer wall (the layered granular active carbon) of the cylindrical deodorizing filter 22 at a velocity of 2 to 80 m per minute. These measurements were made by using an odor detector (an odor level indicator manufactured by New Cosmos Electric Co., Ltd., Japan). The results that were measured are shown in Fig. 4.

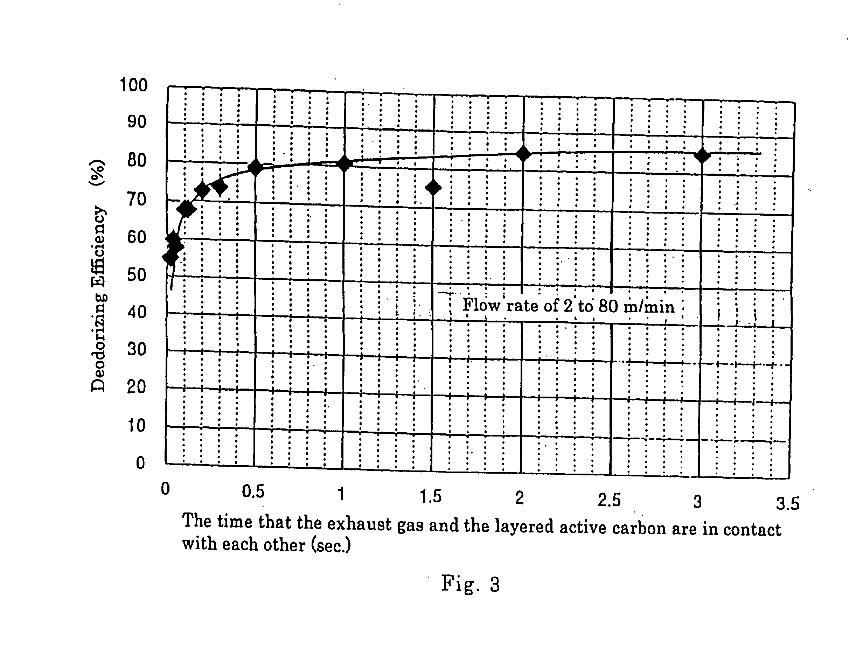

As in the second embodiment, passing the exhaust gas through the outer wall of the cylindrical deodorizing filter 22 at 2 m³ of air per minute, at a velocity of 7 m per minute, and a contact time of 0.43 second, results in a deodorizing efficiency of the deodorizing filter 22 of 78 %, as shown in Fig. 3.

The velocity of the exhaust gas passing through the outer wall of the deodorizing filter 22 in the second embodiment is 3 to 12 m per minute, and preferably is 3 to 8 m per minute. As shown in Fig. 4, where the velocity is more than 12 m per minute, the effective utilization of the active carbon is less than 80%. Where the velocity is less than 3 m per minute, there is no change in the effective utilization factor of the active carbon.

As compared with the conventional exhaust-gas treatment system, in which a relatively high velocity, 15 - 20 m per minute, is employed, the exhaust-gas treatment system in the second embodiment can treat exhaust gas when it penetrates the inside of the granular active carbon. The exhaust gas can thus be efficiently treated to achieve the predetermined condition.

To create a greater surface area of the cylindrical deodorizing filter 22 in relation to its volume and thus to increase its deodorizing efficiency, the cross-section profile of the cylinder body of the cylindrical deodorizing filter 22 is not limited to a circle, but it may have a starburst profile. The cylindrical body may have a periphery with a bellows.

The filtering bag dust collector 10 of the first embodiment can be combined with the exhaust-gas treatment system of the second embodiment. In this case, the layered deodorizing active carbon filter 12 of the first embodiment is replaced with the cylindrical deodorizing filter active carbon filter 22 of the second embodiment. In addition, the blower fan 14 of the first embodiment is configured to have operative conditions similar to those of the second embodiment. Under those conditions, the exhaust gas is passed through the deodorizing filter 22 from its outside to its inside at a velocity of from 3 to 12 m per minute and from 0.3 to 1.0 second of time during which the exhaust gas and the granular active carbon are in contact with each other.

Although several embodiments of the systems disclosed herein and methods of the exhaust-gas treatment of the present invention have been described as exemplifications, those skilled in the art can recognize that various changes and modifications can be made within the spirit and scope of the present invention as defined by the appended claims.

### Brief Descriptions of the Drawings

Fig. 1 shows a schematic diagram of a filtering bag dust collector.
Fig. 2 shows a schematic diagram of the exhaust-gas treatment system to be used in the method of the present invention.
Fig. 3 shows graphs of the relationship between the time that the exhaust gas and the layered active carbon are in contact with each other and the deodorizing efficiency during that contact during the time that the exhaust gas passes through the layered active carbon of the system as shown in Fig. 2 at a velocity of 2 to 80 m per minute.
Fig. 4 shows graphs of the relationship between the flow rate of the exhaust gas and the deodorizing efficiency at that flow rate during the time the exhaust gas passes through the layered active carbon of the system as shown in Fig. 2 at a velocity of 2 to 80 m per minute.

## Claims

1. A method of treating exhaust gas coming from a source including a laser trimmer when it trims plastic, a resin, or an integrated circuit (IC) substrate, a semiconductor manufacturing equipment and LCD manufacturing equipment using an active carbon adsorption means (22) that is layered and formed of granular active carbon in such a quantity of active carbon particles so as to form a cylinder defined by an outer wall that can remove the entrained odoriferous substances from the exhaust gas, said method comprising the steps of
guiding the exhaust gas to said active carbon adsorption means (22); and adsorbing the odoriferous substances by the active carbon grains by passing the exhaust gas through said outer wall from its outside to its inside at a velocity of from 3 to 12 m/min, wherein the exhaust gas and the granular active carbon are in contact with each other from 0.3 to 1.0 second of time and wherein the granular active carbon has an average grain diameter of from 1.0 to 10.0 mm, and using a bag-filter element (14) for collecting the entrained certain substances from said exhaust gas having passed through said active carbon adsorption means (22).

2. A method as in claim 1, wherein said granular active carbon is a granulated active carbon, or a crushed active carbon, or both.

## Patentansprüche

1. Verfahren zur Behandlung von Abgas, das aus einer Quelle, umfassend einen Lasertrimmer, wenn er Plastik, ein Harz oder ein integrierte-Schaltung (IC)-Substrat trimmt, eine Halbleiterherstellungsanlage und eine LCD-Herstellungsanlage, stammt, unter Verwendung eines Aktivkohle-Adsorptionsmittels (22), welches geschichtet und geformt ist aus granulärer Aktivkohle in einer derartigen Menge an Aktivkohlepartikeln, um einen Zylinder zu bilden, der durch eine äußere Wand definiert ist, welche die eingeschlossenen, riechenden Substanzen aus dem Abgas entfernen kann, wobei das Verfahren die Schritte umfasst:
Leiten des Abgases zu diesem Aktivkohle-Adsorptionsmittel (22); und
Adsorbieren der riechenden Substanzen durch die Aktivkohle-Körner indem das Abgas durch diese äußere Wand von deren Außenseite zu deren Innenseite bei einer Geschwindigkeit von 3 bis 12 m/min durchgeleitet wird, wobei das Abgas und die granuläre Aktivkohle über einen Zeitraum von 0,3 bis 1,0 Sekunden in Kontakt miteinander sind und wobei die granuläre Aktivkohle einen durchschnittlichen Korndurchmesser von 1,0 bis 10,0 mm aufweist, und unter Verwendung eines Schlauchfilter-Elements (14) zur Sammlung der bestimmten, eingeschlossenen Substanzen aus diesem Abgas, welches durch dieses Aktivkohle-Adsorptionsmittel (22) geleitet worden ist.

2. Ein Verfahren wie in Anspruch 1, wobei diese granuläre Aktivkohle eine granulierte Aktivkohle, oder eine zerkleinerter Aktivkohle, oder beides ist.

## Revendications

1. Procédé de traitement des gaz d'échappement provenant d'une source comprenant une machine à usiner au laser lorsqu'elle coupe du plastique, une résine ou un substrat de circuit intégré (IC), un équipement de fabrication de semi-conducteurs et un équipement de fabrication de LCD utilisant un moyen d'adsorption au charbon actif (22) qui est disposé en couches et formé de charbon actif granulaire dans une quantité de particules de charbon actif telle de façon à former un cylindre défini par une paroi externe qui peut supprimer les substances odoriférantes entraînées des gaz d'échappement, ledit procédé comprenant les étapes consistant à
guider les gaz d'échappement vers ledit moyen d'adsorption de charbon actif (22) ; et
adsorber les substances odoriférantes d'un par les grains de charbon actif en faisant passer les gaz d'échappement à travers ladite paroi externe depuis son extérieur vers son intérieur à une vitesse allant de 3 à 12 m/min, dans lequel les gaz d'échappement et le charbon actif granulaire sont en contact de l'un avec l'autre de 0,3 à une seconde de temps et dans lequel le charbon actif granulaire présent un diamètre de grains moyens allant de 1,0 à 10,0 mm, et utilisant un élément de filtres à sac (14) destiné à collecter certaines substances entraînées desdits gaz d'échappement étant passé à travers ledit moyen d'adsorption de charbon actif (22).

2. Procédé selon la revendication 1, dans lequel ledit charbon actif granulaire est un charbon actif sous forme de granulés, ou un charbon actif concassé, ou les deux.
